# NEUE EUROPÄISCHE PATENTSCHRIFT

(11) **EP 0 574 417 B2**
(45) Veröffentlichungstag und Bekanntmachung des Hinweises auf die Entscheidung über den Einspruch: **10.04.2002**
(45) Hinweis auf die Patenterteilung: 22.04.1998
(21) Anmeldenummer: 92904357.8
(22) Anmeldetag: 01.02.1992
(51) Int. Cl.: B05D 5/06, B05D 7/16, C08G 18/76, C09D 175/04

(54) **VERFAHREN ZUR HERSTELLUNG EINER MEHRSCHICHTIGEN, SCHÜTZENDEN UND/ODER DEKORATIVEN LACKIERUNG UND VERWENDUNG DES LACKES**
PROCESS FOR PRODUCING A MULTILAYER, PROTECTIVE AND/OR DECORATIVE VARNISH COATING AND USE OF THE COATING
PROCEDE DE PRODUCTION D'UN REVETEMENT DE VERNIS MULTICOUCHE PROTECTEUR ET/OU DECORATIF ET UTILISATION DU REVETEMENT

(30) Priorität: 06.03.1991 DE 4107136
(43) Veröffentlichungstag der Anmeldung: 22.12.1993
(73) Patentinhaber: BASF Coatings Aktiengesellschaft, 48165 Münster (DE)
(72) Erfinder: HARTUNG, Michael, D-59590 Geseke (DE); LASSMANN, Walter, D-48165 Münster (DE); POTH, Ulrich, D-48163 Münster (DE); WEGNER, Egon, D-48317 Drensteinfurt 3 (DE)
(74) Vertreter: Fitzner, Uwe, Dr.
(86) Internationale Anmeldenummer: EP9200220
(87) Internationale Veröffentlichungsnummer: WO9215405

(56) Entgegenhaltungen:
- EP-A- 0 197 170
- EP-A- 0 242 731
- EP-A- 0 297 576
- EP-A- 0 369 389
- EP-A- 0 401 565
- EP-A- 0 452 786
- EP-B- 0 421 609
- WO-A-90/01041
- US-A- 4 719 132
- JOURNAL OF CELLULAR PLASTICS. Bd. 18, Nr. 6, Dezember 1982, WESTPORT CONN US Seiten 376 - 383; V.D. ARENDT ET AL.: 'm- AND p- TMXDI: TWO NEW ISOCYANATES FOR THE POLYURETHANE INDUSTRIE'

## Beschreibung

Die Erfindung betrifft ein Verfahren zur Herstellung einer mehrschichtigen, schützenden und/oder dekorativen Lakkierung bei dem
(1) als Basislack ein wäßriger, pigmentierter Basislack, der ein wasserverdünnbares Polyurethanharz mit anionischen Gruppen enthält, das unter Ausschluß von Diaminen als Kettenverlängerer durch Umsetzung von
   (A) einem Polyester- und/oder Polyesterpolyol mit einem zahlenmittleren Molekulargewicht von 400 bis 5.000 oder einem Gemisch aus solchen Polyester- und/oder Polyetherpolyolen,
   (B) einem Polyisocyanat oder einem Gemisch aus Polyisocyanaten,
   (C) einer Hydroxyl- und/oder Aminogruppen enthaltenden organischen Verbindung mit einem Molekulargewicht von 60 bis 400 (Zahlenmittel) oder einem Gemisch aus solchen Verbindungen und gegebenenfalls
   (D) einer Verbindung, die nur eine gegenüber Isocyanatgruppen reaktive Gruppe im Molekül enthält,
   wobei die zur Anionenbildung befähigten Gruppen durch die Komponente (A) und/oder durch die Komponente (C) in die Polyurethanharzmoleküle eingeführt werden,
   hergestellt wird, auf die Substratoberfläche aufgebracht wird,
(2) aus dem in Stufe (1) aufgebrachten Lack ein Polymerfilm gebildet wird
(3) auf der so erhaltenen Basisschicht ein transparenter Decklack aufgebracht wird und anschließend
(4) die Basisschicht zusammen mit dem Decklack eingebrannt wird.

Bei diesem Verfahren handelt es sich um das gut bekannte Basecoat-Clearcoat-Verfahren, das vor allem zur Herstellung hochwertiger Decklackierungen, insbesondere Metalleffektlackierungen für Automobilkarosserien eingesetzt wird. Der zunächst aufgetragene pigmentierte Basislack wird nach kurzer Ablüftzeit ohne Einbrennschritt im "Naß-in-Naß"-Verfahren mit einem transparenten Decklack (Klarlack) überlackiert. Anschließend werden beide Lackschichten in einem Arbeitsgang gemeinsam eingebrannt.

Die Erfindung betrifft auch ein Verfahren zur Verbesserung der Haftung zwischen Erstlackierung und Reparaturlakkierung.

Die Lackindustrie hat große Anstrengungen zur Reduzierung der insbesondere in den Basislacken eingesetzten organischen Lösemittel unternommen. Es wurden wäßrige Basislacke entwickelt, die die konventionellen, auschließlich organische Lösemittel aufweisenden Basislacke zunehmend verdrängen.

Aus der EP-A-89 497, DE-OS-3545618, EP-A-355433, US-PS-4,719,132 und DE-OS-3903804 ist bekannt, daß insbesondere die wäßrigen Basislacke, die ein wasserverdünnbares Polyurethanharz enthalten, für das in Rede stehende Verfahren besonders gut geeignet sind. In dem Artikel "New and improved waterborne polyurethanes from the TMXDI® (Meta) aliphatic isocyanate family" von Robert D. Cody und Victoria S. Askew wird die Verwendung von wasserverdünnbaren Polyurethanharzen, die Struktureinheiten der Formel - OC-HN-CR¹R²-X-CR¹R²-NH-CO- (I) enthalten, in wäßrigen Überzugszusammensetzungen beschrieben, wobei X für einen zweiwertigen aromatischen Kohlenwasserstoffrest und R¹ und R² für einen Alkylrest mit 1 bis 4 Kohlenstoffatomen stehen.

Aus der EP-A-0 401 565 sind Basislacke bekannt, die Bindemittel auf der Basis hydrophober acrylierter Polyurethane enthalten, worin der Polyurethanteil keine zur Anionenbildung befähigte Gruppen enthält. Maßnahmen zur Verbesserung der Hafting zwischen einer Erstlackierung und einer Reparaturlackierung werden nicht beschrieben.

Die der vorliegenden Erfindung zugrundeliegende Aufgabenstellung besteht in der Bereitstellung eines Verfahrens zur Herstellung einer mehrschichtigen schützenden und /oder dekorativen Lackierung mit dem verbesserte Mehrschichtlackierungen des Basecoat-Clearcoat-Typs erhalten werden. Die der vorliegenden Erfindung zugrundeliegende Aufgabenstellung besteht insbesondere in der Bereitstellung eines Verfahrens zur Verbesserung der Haftung zwischen Erstlackierung und Reparaturlackierung.

Es wurde überraschenderweise gefunden, daß beim Einsatz von wäßrigen Basislacken, die ein wasserverdünnbares Polyurethanharz, wie eingangs definiert, enthalten, das Struktureinheiten der Formel 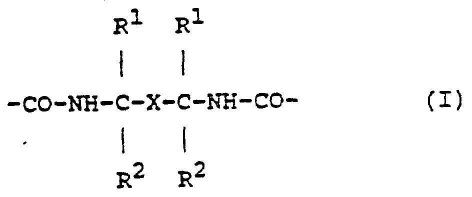 enthält, verbesserte Mehrschichtlackierungen des Basecoat-Clearcoat-Typs erhalten werden, wobei X für einen zweiwertigen, aromatischen Kohlenwasserstoffrest, vorzugsweise für einen gegebenenfalls halogen-, methyl oder methoxysubstituierten Naphtylen-, Biphenylen- oder 1,2- 1,3- oder 1,4-Phenylenrest, besonders bevorzugt für einen 1,3-Phenylenrest und R¹ und R² für einen Alkylrest mit 1 bis 4 Kohlenstoffatomen, besonders bevorzugt für einen Methylrest stehen. Die mit diesen Basislacken erhaltenen Mehrschichtlackierungen zeigen bei Reparaturlackierungen verbesserte Haftungseigenschaften.

In der EP-A-369389 werden wasserverdünnbare Polyurethanharze beschrieben, die unter Verwendung von Tetramethylxylylendiisocyanat (TMXDI, 1,3- oder 1,4-Bis (2-isocyanatoprop-2-yl)benzol) hergestellt werden und auch in Beschichtungszusammensetzungen einsetzbar sein sollen. Die EP-A-369389 enthält jedoch keinerlei Hinweise auf das Basecoat-Clearcoat-Verfahren.

Polyurethanharze mit Struktureinheiten (I) können hergestellt werden, indem Diisocyanate der allgemeinen Formel 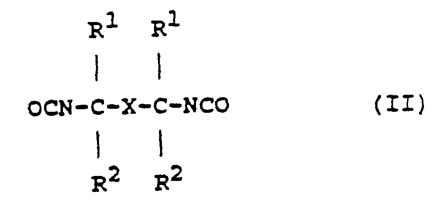 zur Herstellung der Polyurethanharze eingesetzt werden, wobei R¹, R² und X dieselbe Bedeutung wie in Formel (I) haben.

Diisocyanate der Formel (II) sind bekannt (ihre Herstellung wird beispielsweise in der EP-A-101 832, US-PS-3,290,350, US-PS-4,130,577 und US-PS-4,439,616 beschrieben) und zum Teil im Handel erhältlich (1,3- Bis(2-isocyanatoprop-2-yl)benzol wird beispielsweise von der American Cyanamid Company unter dem Handelsnamen TMXDI (META)® verkauft).

Die Polyurethanharze werden in Form von wäßrigen Dispersionen eingesetzt. Die Herstellung wäßriger Polyurethanharzdispersionen ist dem Fachmann bekannt und wird auch beispielsweise in der EP-A-89 497, DE-OS-3545618, EP-A-355 433, US-PS-4,719,132 und DE-OS-3903 804 beschrieben.

Die erfindungsgemäß eingesetzten Polyurethanharze werden üblicherweise durch Umsetzung von
(A) einem Polyester- und/oder Polyetherpolyol mit einem zahlenmittleren Molekulargewicht von 400 bis 5000 oder einem Gemisch aus solchen Polyester- und/oder Polyetherpolyolen
(B) einem Polyisocyanat oder einem Gemisch aus Polyisocyanaten, wobei wenigstens ein Teil der Komponente (B) aus einem Diisocyanat der Formel (II) oder einem Gemisch aus solchen Diisocyanaten besteht
(C) einer Hydroxyl- und/oder Aminogruppen enthaltenden organischen Verbindung mit einem Molekulargewicht von 60 bis 400 (Zahlenmittel) oder einem Gemisch aus solchen Verbindungen und gegebenenfalls
(D) einer Verbindung, die nur eine gegenüber Isocyanatgruppen reaktive Gruppe im Molekül enthält hergestellt.

Die Polyurethanharze weisen üblicherweise ein zahlenmittleres Molekulargewicht von mindestens 1000 auf. Das zahlenmittlere Molekulargewicht der Polyurethanharze sollte vorzugsweise bei mindestens 4000, besonders bevorzugt zwischen 5000 und 8000 liegen.

Die in dieser Anmeldung angegebenen Angaben zu zahlenmittleren Molekulargewichten beziehen sich auf gelpermeationschromatographische Messungen, die mit Hilfe eines Polystyrolstandards durchgeführt werden.

Die Stabilisierung der wäßrigen Polyurethanharzdispersionen erfolgt anionisch oder sowohl anionisch als auch nichtionisch. Als nichtionisch stabilisierende Gruppen können insbesondere Poly(oxyalkylen)gruppen in die Polyurethanharzmoleküle eingeführt werden. Diese Poly(oxyalkylen)gruppen können sowohl über die Komponente (A) als auch über poly(oxyalkylen)gruppenhaltige (C)-Komponenten in die Polyurethanharzmoleküle eingeführt werden. Es werden bevorzugt anionisch stabilisierte Polyurethanharzdispersionen eingesetzt. Die zur Anionenbildung befähigten Gruppen, die vorzugsweise Carboxylgruppen sind, werden durch die komponente (A) (insbesondere als carboxylgruppenhaltige Polyesterpolyole wie in der DE-OS-3903804 beschrieben) und/oder über die Komponente (C) in die Polyurethanharzmoleküle eingeführt. Es ist bevorzugt, zur Stabilisierung der erfindungsgemäß eingesetzten Polyurethanharzdispersionen carboxylgruppenhaltige (C)-Komponenten einzusetzen. Es ist bevorzugt, daß die Polyurethanharze eine Säurezahl von 7 bis 50 vorzugsweise 15 bis 35 aufweisen.

Die erfindungsgemäßen Polyurethanharzdispersionen werden vorzugsweise hergestellt, indem aus den Komponenten (A), (B), und gegebenenfalls (C) ein isocyanatgruppenhaltiges Präpolymer hergestellt wird, das anschließend mit einer wenigstens drei Hydroxylgruppen aufweisenden (C)-Komponente umgesetzt wird. Anschließend werden die Carboxylgruppen mit Hilfe von vorzugsweise tertiären Aminen neutralisiert und das Polyurethanharz in Wasser dispergiert.

Die als Komponente (A) einsetzbaren Polyester- und Polyetherpolyole, die vorzugsweise Polyester- und Polyetherdiole sind, sind in der EP-A-89497, DE-OS-3545618, EP-A-355433, US-PS-4,719,132 und DE-OS-3903804 detailliert beschrieben. Als Komponente (A) werden vorzugsweise Polyesterdiole eingesetzt. Die Komponente (A) wird vorzugsweise in einer solchen Menge eingesetzt, daß sie 50 bis 80, besonders bevorzugt 60 bis 70 Gew.-% des Polyurethanharzes ausmacht, wobei die Gewichtsprozentangaben auf den Feststoffgehalt der Polyurethanharzdispersion bezogen sind.

Als Komponente (B) wird ein Diisocyanat der Formel (II) oder ein Gemisch aus solchen Diisocyanaten eingesetzt. Zusätzlich zu Diisocyanaten der Formel (II) können auch noch andere aliphatische und/oder cycloaiipatische und/oder aromatische Polyisocyanate eingesetzt werden. Als Beispiele für zusätzlich einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt. Neben Diisocyanaten können auch Polyisocyanate mit Funktionalitäten über zwei eingesetzt werden. In diesem Fall ist jedoch sorgfältig darauf zu achten, daß keine vernetzten Polyurethannarze erhalten werden. Gegebenenfalls kann die mittlere Funktionalität durch Mitverwendung von Monoisocyanaten herabgesetzt werden.

Es ist bevorzugt, als Komponente (B) ausschließlich ein Diisocyanat der Formel (II) oder ein Gemisch aus solchen Diisocyanaten einzusetzen. Es ist besonders bevorzugt, als Komponenten (B) ein Diisocyanat der Formel 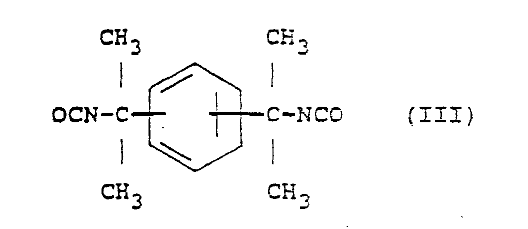 einzusetzen.

Diese Diisocyanate werden auch als Tetramethylxylylendiisocyanate (TMXDI) bezeichnet, Als Komponente (B) wird ganz besonders bevorzugt ein Diisocyanat der Formel (III) eingesetzt, bei dem die -C(CH₃)₂ NCO-Gruppen in meta Stellung stehen (m TMXDI).

Als Komponente (C) können beispielsweise Polyole mit bis zu 44 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Über die Komponete (C) können auch zur Anionenbildung befähigte Gruppen wie Carboxyl-, Sulfonsäure- und/oder Phosphonsäuregruppen in die Polyurethanharzmoleküle eingeführt werden. Es werden bevorzugt Carboxylgruppen über die Komponente (C) in die Polyurethanharzmoleküle eingeführt. Dies kann beispielsweise mit Hilfe von Dihydroxypropionsäure, Dihydroxybernsteinsäure und Dihydroxybenzeosäure erfolgen. Bevorzugte (C)-Komponenten zur Einführung von Carboxylgruppen in die Polyurethanharzmoleküle sind α,α Dimethylolalkansäuren wie 2,2-Dimethylolessigsäure, 2,2-Dimethylolpropionsäure, 2,2-Dimethylolbuttersäure und 2,2 Dimethylolpentansäure. Carboxylgruppen können auch über aminogruppenhaltige (C)-Komponenten wie z.B. α,δ-Diaminovaleriansäure und 3,4-Diaminobenzoesäure eingeführt werden. Die Verwendung von aminogruppenhaltigen (C)-Komponenten ist weniger bevorzugt.

Als Komponente (D) können insbesondere Verbindungen mit einem Molekulargewicht von 60 bis 400 (Zahlenmittel), die entweder eine Hydroxyl- oder eine primäre Amino- oder eine sekundäre Aminogruppe enthalten, eingesetzt werden. Als Komponente (D) werden vorzugsweise aliphatische Alkohole mit 1 bis 6 Kohlenstoffatomen wie z. B. Methanol, Ethanol, Propanol, Butanol, Pentanol oder Hexanol eingesetzt.

Zur Neutralisation der zur Anionenbildung befähigten Gruppen können sowohl organische als auch anorganische Basen eingesetzt werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Der Fachmann kennt mehrere Möglichkeiten, das Molekulargewicht der Polyurethanharze zu beeinflussen. Das Molekulargewicht kann beispielsweise durch das Verhältnis zwischen den eingesetzten Äquivalenten an NCO-Gruppen zu den eingesetzten Äquivalenten an gegenüber NCO-Gruppen reaktiven Gruppen in den Komponenten (A), (C) und (D) beeinflußt werden. Das Molekulargewicht kann weiterhin durch die Umsetzung eines aus (A), (B) und gegebenenfalls (C) hergestellten NCO-gruppenhaltigen Präpolymers mit der Komponente (C) durch die Menge an eingesetzter Komponente (C) gesteuert werden. Je nach dem Verhältnis zwischen den Äquivalenten an freien NCO-Gruppen und Hydroxy gruppen aus der Komponente (C) fungiert (C) als Endgruppenbildner oder Kettenverlängerungsmittel. Das Molekulargewicht kann auch durch Abbrechen der Umsetzung zu dem Zeitpunkt an dem das gewünschte Molekulargewicht erreicht worden ist, gesteuert werden. Die Reaktion kann z. B. abgebrochen werden, indem die Reaktionstemperatur schnell erniedrigt wird und/oder ein Reaktionspartner zugegeben wird, der mit den noch vorhandenen Isocyanatgruppen reagiert, ohne daß Kettenverlängerung eintritt (z. B. Wasser, Komponente (D) oder Komponente (C) im hohen Überschuß).

Die erfindungsgemäß einzusetzenden wäßrigen Polyurethanharzdispersionen können vom Fachmann zu wäßrigen Uni- oder wäßrigen Metalleffektbasislacken verarbeitet werden. Dabei können neben den in Rede stehenden wäßrigen Polyurethanharzdispersionen selbstverständlich noch weitere wasserverdünnbare Kunstharze wie z.B. Aminoplastharze, Polyacrylatharze, Polyesterharze und Polyetherharze eingesetzt werden.

Im allgemeinen sollten die Basislacke 5 bis 90, vorzugsweise 40 bis 70 Gew.-% der erfindungsgemäßen Polyurethanharze enthalten, wobei die Gewichtsprozentangaben auf den Gesamtfeststoffgehalt der Basislacke bezogen sind.

Als Pigmente können die erfindungsgemäß eingesetzten Basislacke farbgebende Pigmente auf anorganischer Basis, wie z.B. Titandioxid, Eisenoxid, Ruß usw., farbgebende Pigmente auf organischer Basis sowie übliche Metallpigmente (z.B. handelsübliche Aluminiumbronzen, Edelstahlbronzen...) und nicht-metallische Effektpigmente (z.B. Perlglanz- bzw. Interferenzpigmente) enthalten. Die Pigmentierungshöhe liegt in üblichen Bereichen.

Weiterhin können den erfindungsgemäß eingesetzten Basislacken vernetzte polymere Mikroteilchen, wie sie z.B. in der EP-A-38 127 offenbart sind und/oder übliche anorganische oder organische Additive zugesetzt werden. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder Polyacrylate sowie carboxylgruppenhaltige Polyacrylat-Copolymere mit einer Säurezahl von 60 bis 780, bevorzugt 200 bis 500.

Die erfindungsgemäß eingesetzten Basislacke weisen im allgemeinen einen Festkörpergehalt von etwa 15 bis 50 Gew.-% auf. Für Metalliclacke liegt er bevorzugt bei 17 bis 25 Gew.-%. Für unifarbige Lacke liegt er höher, beispielsweise bei 30 bis 45 Gew.-%. Die erfindungsgemäßen Lacke können zusätzlich übliche organische Lösemittel enthalten. Deren Anteil wird möglichst gering gehalten. Er liegt beispielsweise unter 15 Gew.-%.

Die erfindungsgemäß eingesetzten Basislacke werden im allgemeinen auf einen pH-Wert zwischen 6,5 und 9,0 eingestellt. Der pH-Wert kann mit üblichen Aminen, wie z.B. Ammoniak, Triethylenamin, Dimethylaminoethanol und N-Methylmorpholin eingestellt werden.

Die erfindungsgemäß eingesetzten Basislacke können mit wäßrigen, konventionellen oder Pulverklarlacken überlackiert werden. Geeignete Klarlacke sind dem Fachmann gut bekannt und werden beispielsweise in der EP-A-89497, US-PS-4,719,132 und EP-A-38127 beschrieben. Bei der Reparaturlackierung werden üblicherweise 2-Komponenten-Klarlacke auf der Basis von hydroxylgruppenhaltigen Bindemitteln (insbesondere hydroxylgruppenhaltigen Polyacrylatharzen) und Polyisocyanaten als Vernetzungsmittel eingesetzt. Unter Reparaturlackierung wird die Ausbesserung von Erstlackierungen durch erneute Überlackierung mit Basislack und Klarlack und gemeinsames Einbrennen des überlackierten Basislackes und Klarlackes verstanden. Reparaturlackierungen können sowohl kurz nach Aufbringung der Serienlackierung als auch erst nach Fertigstellung des Automobils durchgeführt werden. Im ersteren Fall werden im allgemeinen-Einbrenntemperaturen von bis zu etwa 140°C (high-bake-Reparaturlackierung) angewendet, im zweiten Fall werden im allgemeinen Einbrenntemperaturen von bis zu etwa 80°C (low-bake-Reparaturlackierung) angewendet. Mit den erfindungsgemäß eingesetzten Basislacken können Reparaturlackierungen hergestellt worden, die insbesondere auf Erstlackierungen, die nicht z. B. durch Schleifen vorbehandelt worden sind, eine verbesserte Haftung zeigen.

Die verbesserte Haftung zwischen Klarlackschicht und Basislackschicht tritt insbesondere beim Einsatz von 2-Komponenten Klarlacken auf Basis von hydroxyl- und carboxylgruppenhaltigen Polyacrylatharzen und Polyisocyanaten auf, wobei die Polyacrylatharze aus mindestens einem Alkyl(meth)acrylat mit 1 bis 18 C-Atomen im Alkylrest, mindestens einem hydroxylgruppenhaltigen Monomeren wie z. B. Hydroxyethyl(meth)acrylat, Hydroxypropyl(meth)acrylat oder Hydroxybutyl(meth)acrylat, mindestens einem carboxylgruppenhaitigen Monomer wie z. B. (Meth)acrylsäure sowie gegebenenfalls mindestens einem weiteren copolymerisierbaren Monomeren wie z. B. Styrol hergestellt worden sind und zahlenmittlere Molekulargewichte von 2500 bis 10000, Hydroxylzahlen von 70 bis 180, vorzugsweise 100 bis 160 und Säurezahlen von 4 bis 30, vorzugsweise 10 bis 25 aufweisen.

Die erfindungsgemäß eingesetzten Basislacke können durch Spritzen, Rakeln, Tauchen oder Walzen auf beliebige Substrate wie z.B. Metall, Holz, Kunststoff oder Papier aufgebracht werden. Der Auftrag kann direkt erfolgen oder erst nach Aufbringung einer geeigneten Grundierung. Bei der Lackierung von Automobilkarosserien werden die Basislacke üblicherweise auf die Füllerschicht lackiert.

In den folgenden Beispielen wird die Erfindung näher erläutert. Alle Angaben zu Prozenten und Teilen sind Gewichtsangaben, wenn nicht ausdrücklich etwas anderes angegeben ist.

### 1. Herstellung von Polyurethanharzdispersionen

1.1. In einem 6I Reaktionsgefäß mit Rührer, Rückflußkühler und 2 Zulaufgefäßen wird eine Mischung aus 798 g eines Polyesterdiols mit einem zahlenmittleren Molekulargewicht von 1400 (hergestellt aus hydrierter dimerisierter Fettsäure (Pripol 1009, Handelsprodukt der Firma Unichema International), 1,6-Hexandiol und Phthalsäureanhydrid), 12,5 g 1,6-Hexandiol. 65 g Dimethylolpropionsäure und 516,6 g Methylethylketon vorgelegt. Zu dieser Mischung werden 299 g Isophorondiisocyanat (IPDI) gegeben. Anschließend wird bei 82 °C so lange umgesetzt, bis der Isocyanatgehalt auf 1 Gew.-% abgesunken ist. Dann werden dem Reaktionsgemisch 31 g Trimethylolpropan hinzugefügt und die Mischung wird weiter auf etwa 82 °C gehalten. Dann wird der Viskositätsanstieg des Reaktionsgemisches verfolgt, indem jeweils 10 ml der Reaktionsmischung mit 10 ml N-Methylpyrrolidon versetzt werden und die Viskosität dieser Probenlösung bei 23°C mit einem Platte-Kegel Viskosimeter gemessen wird. Sobald die nach dieser Vorschrift erhaltenen Probenlösungen eine Viskosität von 5 dPas aufweisen (nach etwa 5 Stunden), wird die Reaktion durch Zugabe von 54 g Butanol gestoppt. Dann werden dem erhaltenen Reaktionsprodukt 38 g Dimethylethanolamin und 3254 g entionisiertes Wasser innerhalb von 2 Stunden unter starkem Rühren zugefügt Schließlich wird das Methylethylketon unter Vakuum abdestilliert. Die so entstandene wäßrige Polyurethanharzdispersion weist einen Feststoffgehalt von 27 Gew.- % auf.
1.2. Es wird wie unter Pkt. 1.1 beschrieben verfahren. Anstelle von 299 g IPDI werden jedoch 353 g 4,4'-Di-(isocyanatocyclohexyl)methan und anstelle von 516,6 g Methylethylketon werden 539,7 g Methylethylketon eingesetzt.
1.3. Es wird wie unter Pkt. 1.1 beschrieben verfahren. Anstelle von 299 g IPDI werden jedoch 329 g 1,3-Bis-(2-isocyanatoprop-2-yl)benzol (m-TMXDI) und anstelle von 516,6 g Methylethylketon werden 529,5 g Methylethylketon eingesetzt

### 2. Herstellung einer wäßrigen Polyesterharzdispersion

In einem Reaktor, der mit einem Rührer, einem Thermometer und einer Füllkörperkolonne ausgestattet ist, werden 729 Gew.-Teile Neopentylglykol, 827 Gew.-Teile Hexandiol, 462 Gew.-Teile Hexahydrophthalsäureanhydrid und 1710 Gew.-Teile einer polymeren Fettsäure (Dimerengehalt mindestens 98 Gew.-%, Trimerengehalt höchstens 2 Gew.-%, Monomerengehalt höchstens Spuren) eingewogen und zum Schmelzen gebracht. Unter Rühren wird so aufgeheizt, daß die Kolonnenkopftemperatur 100 °C nicht übersteigt. Es wird bei max. 220 °C so lange verestert, bis eine Säurezahl von 8,5 erreicht ist Nach Abkühlen auf 180 °C werden 768 Gew.-Teile Trimellithsäureanhydrid zugegeben und weiter verestert, bis eine Säurezahl von 30 erreicht ist. Dann wird auf 120 °C abgekühlt und mit 1410 Gew.-Teilen Butanol angelöst Nach dem Abkühlen auf 90°C werden langsam 16,2 Gew.-Teile Dimethylethanolamin und anschließend 1248 Gew.-Teile deionisiertes Wasser eingerührt. Man erhält eine feinteilige Dispersion mit einem pH-Wert von 7,8, einem nichtflüchtigen Anteil von 60 Gew.-% und einer Säurezahl von 30 mg KOH/g.

### 3. Herstellung der Basislacke

Unter Verwendung der nach Pkt. 1.1, Pkt. 1.2 und Pkt. 1.3 hergestellten Polyurethanharzdispersionen werden 3 Basislacke hergestellt, indem 33,5 Gew.-Teile Verdickungsmittel (Paste eines Natrium-Magnesium-Silikates mit Schichtstruktur, 3 %ig in Wasser) vorgelegt werden und dann eine Lösung aus 3,4 Gewichtsteilen Butylglykol und 6,0 Gewichtsteilen einer 90 %igen Lösung eines handelsüblichen wasserverdünnbaren Melamin-Formaldehydharzes in Isobutanol (Cymel 327® , Handelsprodukt der American Cyanamid Company) unter starkem Rühren (Dissolver) zugegeben wird. Anschließend werden dieser Mischung 33,3 Gewichtsteile der Polyurethanharzdispersion unter starkem Rühren zugegeben. Getrennt davon wird eine Aluminiumpigmentaufschlämmung wie folgt hergestellt: 4,4 Gew.-Teile einer handelsüblichen chromatierten Aluminiumpaste (65 %ig in Benzin/Solventnahptha/Butylglykol, durchschnittlicher Teilchendurchmesser: 15 µm) werden unter Zugabe von 6,0 Gew.-Teilen Butylglykol homogenisiert Zu dieser Aufschlämmung werden anschließend 6,4 Gew.-Teile der Polyesterharzdispersion gemäß Pkt. 2 gegeben. Diese Aluminiumpigmentaufschlämmung wird in die oben beschriebene Mischung eingerührt Danach werden noch 6,5 Gew.-Teile deionisiertes Wasser zugegeben und mit Dimethylethanolaminlösung (10 %ig in Wasser) ein pH-Wert von 7,65-7,85 eingestellt.

### 4. Applikation und Prüfung der wäßrigen Basislacke

Die gemäß Pkt. 3 hergestellten wäßrigen Basislacke werden mit destilliertem Wasser auf einen Applikationsfestkörper von 24,2 Gew-% eingestellt und auf ein mit einer handelsüblichen Elektrotauchlackierung und einem handelsüblichen Füller beschichtetes phosphatiertes Stahlblech mit einer pneumatischen Sprühpistole so appliziert, daß eine Trockenfilmdicke von 13 - 16 µm erhalten wird. Die applizierten Basislacke werden 10 Minuten bei 80 °C im Umluftofen getrocknet. Dann wird mit einem handelsüblichen 2 Komponenten-Klarlack auf Basis Polyacrylat/Polyisocyanat überlackiert und 20 Minuten bei 140 °C im Umluftofen eingebrannt. Die so lackierten Bleche werden nochmals mit den Basislacken und anschließend nach einer Vortrockenzeit mit einem für Reparaturzwecke geeigneten handelsüblichen 2 Komponenten Klarlack auf Basis Polyacrylat/Polyisocyanat überlackiert. Die auf diese Weise erhaltenen Reparaturlackierungen werden schließlich im Umluftofen 40 Minuten bei 80 °C eingebrannt. Die Trockenfilmdicke der Klarlacke beträgt ca. 40 µm. Die Lackierungen zeigen auch nach 240-stündiger Belastung im Schwitzwasserkonstantklima nach DIN 50017 hohe Brillianz und einen guten metallischen Effekt. Eine eine Stunde nach der Schwitzwasserkonstantklimabelastung durchgeführte Haftungsprüfung nach DIN 53151 inklusive Tesaabriß-Test zeigt jedoch, daß die unter Verwendung des Basislackes, der die gemäß Pkt. 1.3. hergestellte Polyurethanharzdispersion enthält, hergestellte Lackierung eine deutlich bessere Haftung zwischen der ersten und zweiten Lackierung zeigt, als die Lackierungen, die unter Verwendung der Basislacke, die die gemäß Pkt. 1.1. bzw. 1.2. hergestellten Polyurethanharzdispersionen enthalten, hergestellt worden sind.

## Patentansprüche

1. Verfahren zur Herstellung einer mehrschichtigen, schützenden und/oder dekorativen Lackierung, bei dem
(1) als Basislack ein wäßriger, pigmentierter Basislack, der ein wasserverdünnbares Polyurethanharz mit anionischen Gruppen enthält, das unter Ausschluß von Diaminen als Kettenverlängerer durch Umsetzung von
(A) einem Polyester- und/oder Polyesterpolyol mit einem zahlenmittleren Molekulargewicht von 400 bis 5.000 oder einem Gemisch aus solchen Polyester- und/oder Polyetherpolyolen,
(B) einem Polyisocyanat oder einem Gemisch aus Polyisocyanaten,
(C) einer Hydroxyl- und/oder Aminogruppen enthaltenden organischen Verbindung mit einem Molekulargewicht von 60 bis 400 (Zahlenmittel) oder einem Gemisch aus solchen Verbindungen und gegebenenfalls
(D) einer Verbindung, die nur eine gegenüber Isocyanatgruppen reaktive Gruppe im Molekül enthält,
wobei die zur Anionenbildung befähigten Gruppen durch die Komponente (A) und/oder durch die Komponente (C) in die Polyurethanharzmoleküle eingeführt werden,
hergestellt wird, auf die Substratoberfläche aufgebracht wird,
(2) aus dem in Stufe (1) aufgebrachten Lack ein Polymerfilm gebildet wird
(3) auf der so erhaltenen Basisschicht ein transparenter Decklack aufgebracht wird und anschließend
(4) die Basisschicht zusammen mit dem Decklack eingebrannt wird,
**dadurch gekennzeichnet, daß** das wasserverdünnbare Polyurethanharz Struktureinheiten der Formel -OC-HN-CR¹R²-X-CR¹R²-NH-CO- (I) enthält, wobei X für einen zweiwertigen aromatischen Kohlenwasserstoffrest und R¹ und R² für einen Alkylrest mit 1 bis 4 Kohlenstoffatomen stehen.

2. Verfahren nach Anspruch 1, **dadurch gekennzeichnet, daß** X für einen Phenylenrest steht.

3. Verfahren nach Anspruch 1 oder 2, **dadurch gekennzeichnet, daß** das wasserverdünnbare Polyurethanharz ein zahlenmittleres Molekulargewicht von 4000 bis 8000, gemessen mit Gelpermeationschromatographie mit Hilfe eines Polystyrolstandards, aufweist.

4. Verfahren nach einem der Ansprüche 1 bis 3, **dadurch gekennzeichnet, daß** der Basislack das wasserverdünnbare Polyurethanharz in einer Menge von 5 bis 90 Gew.-%, bezogen auf den Gesamtfeststoffgehalt des Basislackes, enthält.

5. Verfahren nach einem der Ansprüche 1 bis 4, **dadurch gekennzeichnet, daß** der Basislack einen Festkörpergehalt von 15 bis 50 Gew. % aufweist.

6. Verfahren nach einem der Ansprüche 1 bis 5, **dadurch gekennzeichnet, daß** der Basislack auf einen pH-Wert zwischen 6,5 und 9,0 eingestellt ist

7. Verfahren zur Verbesserung der Haftung zwischen Erstlackierung und Reparaturlackierung, **dadurch gekennzeichnet, daß**
(1) als Basislack ein wäßriger, pigmentierter Basislack, der ein wasserverdünnbares Polyurethanharz mit anionischen Gruppen enthält, das unter Ausschluß von Diaminen als Kettenverlängerern hergestellt wird und das Struktureinheiten der Formel -OC-HN-CR¹R²-X-CR¹R²-NH-CO- (I) enthält, wobei X für einen zweiwertigen aromatischen Kohlenwasserstoffrest und R¹ und R² für einen Alkylrest mit 1 bis 4 Kohlenstoffatomen stehen, auf die Erstlackierung aufgebracht wird
(2) aus dem in Stufe (1) aufgebrachten Lack ein Polymerfilm gebildet wird
(3) auf der so erhaltenen Basisschicht ein transparenter Decklack aufgebracht wird und anschließend
(4) die Basisschicht zusammen mit dem Decklack eingebrannt wird.

8. Verfahren nach Anspruch 7, **dadurch gekennzeichnet, daß** X für einen Phenylenrest steht.

9. Verfahren nach Anspruch 7 oder 8, **dadurch gekennzeichnet, daß** das wasserverdünnbare Polyurethanharz ein zahlenmittleres Molekulargewicht von 4000 bis 8000, gemessen mit Gelpermeationschromatographie mit Hilfe eines Polystyrolstandards, aufweist.

10. Verfahren nach einem der Ansprüche 7 bis 9, **dadurch gekennzeichnet, daß** der Basislack das wasserverdünnbare Poiyurethanharz in einer Menge von 5 bis 90 Gew.-%, bezogen auf den Gesamtfeststoffgehalt des Basislackes, enthält.

11. Verfahren nach einem der Ansprüche 7 bis 10, **dadurch gekennzeichnet, daß** der Basislack einen Festkörpergehalt von 15 bis 50 Gew. % aufweist.

12. Verfahren nach einem der Ansprüche 7 bis 11, **dadurch gekennzeichnet, daß** der Basislack auf einen pH-Wert zwischen 6,5 und 9,0 eingestellt ist.

## Claims

1. Process for the production of a multicoat protective and/or decorative finish in which
(1) an aqueous pigmented basecoat containing a water-thinnable polyurethane resin is applied to the substrate surface as basecoat,
(2) a polymer film is formed from the coating applied in stage (1),
(3) a transparent topcoat is applied to the basecoat obtained in this way and subsequently
(4) the basecoat is baked together with the topcoat,
**characterized in that** the water-thinnable polyurethane resin contains structural units of the formula -OC-HN-CR¹R²-X-CR¹R²-NH-CO- (I), X representing a divalent aromatic hydrocarbon radical and R¹ and R² representing an alkyl radical having 1 to 4 carbon atoms.

2. Process according to claim 1, **characterized in that** X represents a phenylene radical.

3. Process according to claim 1 or 2, **characterized in that** the water-thinnable polyurethane resin has a number average molecular weight of 4000 to 8000, measured by gel permeation chromatography with the aid of a polystyrene standard.

4. Process according to one of claims 1 to 3, **characterized in that** the basecoat contains the water-thinnable polyurethane resin in an amount of 5 to 90 % by weight, based on the total solids content of the basecoat.

5. Process according to one of claims 1 to 4, **characterized in that** the basecoat has a solids content of 15 to 50 % by weight.

6. Process according to one of claims 1 to 5, **characterized in that** the pH of the basecoat is adjusted to between 6.5 and 9.0.

7. Process for improving the adhesion between the original finish and the refinish, **characterized in that** (1)an aqueous pigmented basecoat containing a water-thinnable polyurethane resin, which contains structural units of the formula
(1) -OC-HN-CR¹R²-X-CR¹R²-NH-CO- (I), X representing a divalent aromatic hydrocarbon radical and R¹ and R² representing an alkyl radical having 1 to 4 carbon atoms, is applied to the original finish as basecoat,
(2) a polymer film is formed from the coating applied in stage (1),
(3) a transparent topcoat is applied to the basecoat obtained in this way and subsequently
(4) the basecoat is baked together with the topcoat.

8. Process according to Claim 7, **characterized in that** X represents a phenylene radical.

9. Process according to Claim 7 or 8, **characterized in that** the water-thinnable polyurethane resin has a number average molecular weight of 4000 to 8000, measured by gel permeation chromatography with the aid of a polystyrene standard.

10. Process according to one of claims 7 to 9, **characterized in that** the basecoat contains the water-thinnable polyurethane resin in an amount of 5 to 90 % by weight, based on the total solids content of the basecoat.

11. Process according to one of claims 7 to 10, **characterized in that** the basecoat has a solids content of 15 to 50 % by weight.

12. Process according to one of claims 7 to 11, **characterized in that** the pH of the basecoat is adjusted to between 6.5 and 9.0.

## Revendications

1. Procédé de préparation d'un revêtement de vernis multicouche protecteur et/ou décoratif, dans lequel
(1) on applique sur la surface du substrat, en tant que revêtement de fond, un revêtement de fond aqueux pigmenté contenant une résine de polyuréthane hydrodiluable
(2) on forme un film polymère à partir du revêtement appliqué à l'étape (1)
(3) on applique une couche de finition transparente sur la couche de fond ainsi obtenue, et ensuite
(4) on cuit la couche de fond conjointement avec la couche de finition,
**caractérisé en ce que** la résine de polyuréthane hydrodiluable contient des motifs structuraux de formule -OC-HN-CR¹R²-X-CR¹R²-NH-CO- (I) dans laquelle X désigne un radical hydrocarboné aromatique divalent et R¹ et R² désignent un radical alkyle ayant de 1 à 4 atomes de carbone.

2. Procédé selon la revendication 1, **caractérisé en ce que** X désigne un radical phénylène.

3. Procédé selon la revendication 1 ou 2, **caractérisé en ce que** la résine de polyuréthane hydrodiluable présente un poids moléculaire moyen en nombre de 4 000 à 8 000, mesuré par chromatographie par perméation de gel à l'aide d'un étalon polystyrène.

4. Procédé selon l'une quelconque des revendications 1 à 3, **caractérisé en ce que** le revêtement de fond contient la résine de polyuréthane hydrodiluable en une quantité de 5 à 90% en poids, par rapport à la teneur totale en matières solides du revêtement de fond.

5. Procédé selon l'une quelconque des revendications 1 à 4, **caractérisé en ce que** le revêtement de fond présente une teneur en matières solides de 15 à 50% en poids.

6. Procédé selon l'une quelconque des revendications 1 à 5, **caractérisé en ce que** le revêtement de fond est ajusté à un pH compris entre 6,5 et 9,0.

7. Procédé d'amélioration de l'adhérence entre un premier revêtement de vernis et un revêtement de vernis pour retouches, **caractérisé en ce que**
(1) on applique sur le premier revêtement de vernis, en tant que revêtemement de fond, un revêtement de fond aqueux pigmenté contenant une résine de polyuréthane hydrodiluable, qui contient des motifs structuraux de formule -OC-HN-CR¹R²-X-CR¹R²-NH-CO- (I), dans laquelle X désigne un radical hydrocarboné aromatique divalent et R¹ et R² désignent un radical alkyle ayant de 1 à 4 atomes de carbone,
(2) on forme un film polymère à partir du revêtement appliqué à l'étape (1)
(3) on applique une couche de finition transparente sur la couche de fond ainsi obtenue, et ensuite
(4) on cuit la couche de fond conjointement avec la couche de finition.

8. Procédé selon la revendication 7, **caractérisé en ce que** X désigne un radical phénylène.

9. Procédé selon la revendication 7 ou 8, **caractérisé en ce que** la résine de polyuréthane hydrodiluable présente un poids moléculaire moyen en nombre de 4 000 à 8 000, mesuré par chromatographie par perméation de gel à l'aide d'un étalon polystyrène.

10. Procédé selon l'une quelconque des revendications 7 à 9, **caractérisé en ce que** le revêtement de fond contient la résine de polyuréthane hydrodiluable en une quantité de 5 à 90% en poids, par rapport à la teneur totale en matières solides du revêtement de fond.

11. Procédé selon l'une quelconque des revendications 7 à 10, **caractérisé en ce que** le revêtement de fond présente une teneur en matières solides de 15 à 50% en poids.

12. Procédé selon l'une quelconque des revendications 7 à 11, **caractérisé en ce que** le revêtement de fond est ajusté à un pH compris entre 6,5 et 9,0.
